# EUROPÄISCHE PATENTANMELDUNG

(11) **EP 1 890 252 A1**
(43) Veröffentlichungstag der Anmeldung: **20.02.2008**
(21) Anmeldenummer: 06016931.5
(22) Anmeldetag: 14.08.2006
(51) Int. Cl.: G06K 19/06

(54) **Kartenförmiger Datenträger und Verfahren zum Aufzeichnen von Information auf einen derartigen Datenträger**

(71) Anmelder: Mauer Electronics GmbH, 80992 München (DE)
(72) Erfinder: Fast, Peter, 86923 Finning/Entraching (DE)
(74) Vertreter: TER MEER - STEINMEISTER & PARTNER GbR

(57) **Zusammenfassung**

Die Erfindung betrifft einen kartenförmiger Datenträger mit einem Substrat (1) und mindestens einer transparenten Deckschicht (2), der einen Aufzeichnungsbereich für Information aufweist, sowie ein Verfahren zum Aufzeichnen von Information auf einen derartigen Datenträger. Um die Fälschungssicherheit eines kartenförmiger Datenträgers weiter zu erhöhen ist vorgesehen, dass in der Deckschicht (2) Lichtstreuzentren (3) entsprechend darzustellender Information ausgebildet sind, die mittels Strahlung, insbesondere mittels Licht, vorzugsweise mittels Laserstrahlung erzeugt werden.

## Beschreibung

Die Erfindung betrifft einen kartenförmiger Datenträger und ein Verfahren zum Aufzeichnen von Information auf einen derartigen Datenträger.

Ein bekannter Daten- oder Aufzeichnungsträger für Bildinformationen (EP 0 537 484 A1), der insbesondere als Wert- oder Ausweiskarte verwendet wird, besteht aus einem als lichtstreuender Hintergrund wirkenden Karteninlett und einer darauf angeordneten transparenten Folie, auf der eine farbaufnehmende Schicht angeordnet ist. Die transparente Folie dient als Substrat, in das optisch erkennbare Information durch Karbonisieren oder Schwärzen des Folienmaterials mit Hilfe von Laserstrahlung eingeschrieben werden kann. Die farbaufnehmende Schicht kann durch Auftragen oder Einbringen von Farbstoffen farbig bedruckt werden.

Zur Erhöhung der Fälschungssicherheit derartiger Daten- oder Aufzeichnungsträger werden eine Vielzahl von Merkmalen eingesetzt, die aus dem Wertpapierdruck bekannt sind, wie z. B. Guillochen und dergleichen, aber es werden auch andere für derartige Datenträger spezifische Sicherheitsmerkmale verwendet, wie z. B. so genannte Kippbilder, bei denen zwei sich ergänzende Informationen durch ein Linsenraster hindurch in einen Aufzeichnungsbereich des Datenträgers eingeschrieben werden, so dass diese Informationen je nach Betrachtungswinkel wahlweise erkennbar sind. Derartige Datenträger sind in der EP 0 216 947 B1 und der EP 0 219 012 A2 beschrieben. Obwohl derartige Kippbilder relativ schwer zu fälschen sind, besteht weiterhin das Bedürfnis, die Fälschungssicherheit von Datenträgern, insbesondere von Wert- und Ausweiskarten zu erhöhen.

Der Erfindung liegt demzufolge die Aufgabe zugrunde, einen weiteren kartenförmigen Datenträger sowie ein Verfahren zum Aufzeichnen von Information auf einen derartigen Datenträger zu schaffen, der eine erhöhte Fälschungssicherheit besitzt.

Diese Aufgabe wird durch den Datenträger nach Anspruch 1 und das Verfahren nach Anspruch 12 gelöst. Vorteilhafte Ausgestaltungen und Weiterbildungen der Erfindung sind in den jeweiligen Unteransprüchen beschrieben.

Um eine fälschungssichere Aufzeichnung von Informationen zu erhalten, sind in einer transparenten Deckschicht des kartenförmigen Datenträgers Lichtstreuzentren vorgesehen, die entsprechend der darzustellenden Information angeordnet sind. Durch die Verwendung von Streuzentren zur Darstellung der Information erscheint diese für den Betrachter in der Deckschicht ähnlich wie ein Wasserzeichen und nicht wie darauf oder darunter gedruckt. Unter Deckschicht ist hier jeden selbstragende oder auf einem Substrat angeordnete, ein- oder mehrlagige Schicht eines kartenförmigen Datenträgers zu verstehen, die dem Betrachter auf der Vorder- oder Rückseite des Datenträgers zu gewandt ist.

Vorteilhafter Weise sind als Lichtstreuzentren kleine transparente Bereiche vorgesehen, deren Brechungsindex von dem der Deckschicht verschieden ist. Besonders bevorzugt ist es, wenn diese transparenten Bereiche von kleinen Hohlräumen oder Bläschen gebildet werden, deren Durchmesser insbesondere im Bereich von 0,25 mm bis 0,03 mm liegt. Die Lichtstreuzentren, also insbesondere die kleinen Hohlräume oder Bläschen können alle den gleichen Durchmesser besitzen. Gemäß einer vorteilhaften Ausgestaltung der Erfindung weisen sie jedoch unterschiedliche Durchmesser entsprechend der von ihnen darzustellenden Information auf.

Um die Fälschungssicherheit weiter zu erhöhen, ist bei einem besonders bevorzugten Ausführungsbeispiel der Erfindung vorgesehen, dass die Lichtstreuzentren entsprechend der von diesen darzustellenden Information für eine dreidimensionale Darstellung in Dickenrichtung der Deckschicht gegeneinander versetzt sind.

Um die Erkennbarkeit der aufgezeichneten Information für den Betrachter zu verbessern, ist es zweckmäßig, wenn der Fläche der Deckschicht, die von der Betrachtungsseite der Deckschicht abgewandt ist, eine Kontrastschicht zugeordnet ist. Die Kontrastschicht kann dabei eine diffus reflektierende Schicht oder eine lichtabsorbierende Schicht sein, je nachdem ob die dargestellte Information dunkel vor einem hellen Hintergrund oder hell vor einem dunklen erscheinen soll.

Grundsätzlich ist es denkbar, dass die transparente Deckschicht als selbsttragende Schicht im Wesentlichen den Datenträger bildet, auf dem auch weitere Informationen aufgedruckt und/oder eingeprägt sind. Ist die Deckschicht jedoch auf einem Substrat angeordnet, so ist es vorteilhaft, wenn die Kontrastschicht von dem Substrat gebildet ist.

Bei einer besonders vorteilhaften Ausgestaltung der Erfindung ist vorgesehen, dass eine Anzahl der Lichtstreuzentren in der Deckschicht sich bis in eine den Aufzeichnungsbereich für Information tragende Schicht erstrecken. Hierdurch lässt sich eine Verschweißung zwischen der Deckschicht und der den Aufzeichnungsbereich für Information tragenden Schicht, also dem Substrat herstellen, die die Fälschungssicherheit des erfindungsgemäßen Datenträgers weiter erhöht, da die Darstellung der in der Deckschicht und teilweise im Substrat aufgezeichneten Information zerstört wird, wenn die Deckschicht von dem Substrat, also von der den Aufzeichnungsbereich für Information tragenden Schicht, abgelöst werden sollte, um den Datenträger zu verfälschen. Die Fälschungssicherheit wird also dadurch erhöht, dass aufgrund der Ausbildung von Lichtstreuzentren im Grenzbereich der Deckschicht erkannt werden kann, ob die Deckfolie vom Substrat abgenommen und anschließend wieder aufgebracht wurde.

Ferner ist es möglich, zusätzlich zu den Lichtstreuzentren in der Deckschicht in oder auf einer den Aufzeichnungsbereich für Information tragenden Schicht Bildpunkte vorzusehen, die gemeinsam mit den Lichtstreuzentren in der Deckschicht eine Gesamtinformation darstellen. Auch hierdurch lässt sich die Fälschungssicherheit des erfindungsgemäßen Datenträgers weiter verbessern, da die Darstellung von Information durch Lichtstreuzentren in der Deckschicht und Bildpunkte in oder auf dem Substrat beim Trennen von Deckschicht und Substrat irreversibel zerstört wird.

Zweckmäßiger Weise ist die Deckschicht aus Polycarbonat hergestellt.

Ein besonders vorteilhaftes Verfahren zum Aufzeichnen von Information auf einen erfindungsgemäßen Datenträger zeichnet sich dadurch aus, dass in einem Aufzeichnungsbereich in der Deckschicht Lichtstreuzentren entsprechend darzustellender Information mittels Strahlung, insbesondere mittels Licht, vorzugsweise mittels Laserstrahlung erzeugt werden. Durch die Verwendung von Strahlung, insbesondere Licht, vorzugsweise Laserstrahlung, lassen sich die Lichtstreuzentren in der Deckschicht entsprechend der darzustellenden Information mit sehr großer Genauigkeit und damit mit hoher Auflösung ausbilden, was unerlaubtes Kopieren der aufgezeichneten Information zumindest wesentlich erschwert, wenn nicht gar unmöglich macht.

Bei einer vorteilhaften Ausgestaltung der Erfindung ist vorgesehen, dass der Brechungsindex der Deckschicht zur Bildung der Lichtstreuzentren, die der aufzuzeichnenden Information entsprechen, durch Strahlung verändert wird, so dass kleine transparente Bereiche gebildet werden, deren Brechungsindex von dem der Deckschicht verschieden ist. Insbesondere werden als Lichtstreuzentren kleine Hohlräume oder Bläschen erzeugt, deren Durchmesser insbesondere im Bereich von 0,25 mm bis 0,03 mm liegt.

Hohlräume oder Bläschen in der transparenten Deckschicht haben den Vorteil, dass sie einfach durch eine Art "Aufkochen" des Deckschichtmaterials gebildet werden können, wobei sich die Größe der Bläschen durch die jeweils punktgenau zugeführte Strahlungsenergie einstellen lässt.

Grundsätzlich kann die aufzuzeichnende Information mit Streuzentren, also kleinen Hohlräumen oder Bläschen gleicher Größe dargestellt werden, bevorzugt ist es jedoch, dass die Lichtstreuzentren entsprechend der von diesen darzustellenden Information mit unterschiedlichen Durchmesser hergestellt werden, wobei die Lichtstreuzentren zusätzlich entsprechend der von ihnen darzustellenden Information für eine dreidimensionale Darstellung in Dickenrichtung in der Deckschicht gegeneinander versetzt ausgebildet werden. Die dreidimensionale Darstellung von Information in der Deckschicht erschwert das unerlaubte Kopieren zusätzlich.

Ferner ist es möglich, dass eine Anzahl der Lichtstreuzentren so im Bereich einer inneren Oberfläche der Deckschicht mittels Strahlung erzeugt werden, dass sich diese Lichtstreuzentren bis in eine den Aufzeichnungsbereich für Information tragende Schicht erstrecken. Die Ausbildung der Lichtstreuzentren im Grenzbereich zwischen der Deckschicht und der den Aufzeichnungsbereich für Information tragenden Schicht, also beispielsweise dem Substrat, führt zu einer Verschweißung von Deckschicht und Substrat, die einerseits ein zerstörungsfreies Abtrennen der Deckschicht vom Substrat verhindert und die andererseits, falls trotzdem ein zerstörungsfreies Abtrennen gelingen sollte; zumindest zu einer Zerstörung der dargestellten Information führt, so dass festgestellt werden kann, ob die Deckschicht des kartenförmigen Datenträgers zum Verfälschen derselben abgetrennt wurde.

Eine andere Weiterbildung der Erfindung zeichnet sich dadurch aus, dass zusätzlich zu den Lichtstreuzentren in der Deckschicht in oder auf einer den Aufzeichnungsbereich für Information tragenden Schicht mittels Strahlung, insbesondere mittels Licht, vorzugsweise mittels Laserstrahlung, Bildpunkte erzeugt werden, die gemeinsam mit den Lichtstreuzentren in der Deckschicht eine Gesamtinformation darstellen.

Ein besonders zweckmäßiges Material für die Deckschicht stellt Polycarbonat (PC) dar, da in diesem Material Hohlräume oder Bläschen mittels Laserstrahlung besonders gut herzustellen sind.

Die Erfindung wird im Folgenden beispielsweise anhand der Zeichnung näher erläutert. Es zeigen:
Fig. 1 eine schematische vergrößerte Schnittansicht eines erfindungsgemäßen Datenträgers,
Fig. 2 eine Darstellung ähnlich Fig. 1 zur Erläuterung des erfindungsgemäßen Verfahrens, und
Fig. 3 eine schematische, vergrößerte Schnittansicht eines Datenträgers gemäß einer anderen Ausgestaltung der Erfindung.

In den Figuren der Zeichnung sind einander entsprechende Elemente mit gleichen Bezugszeichen versehen.

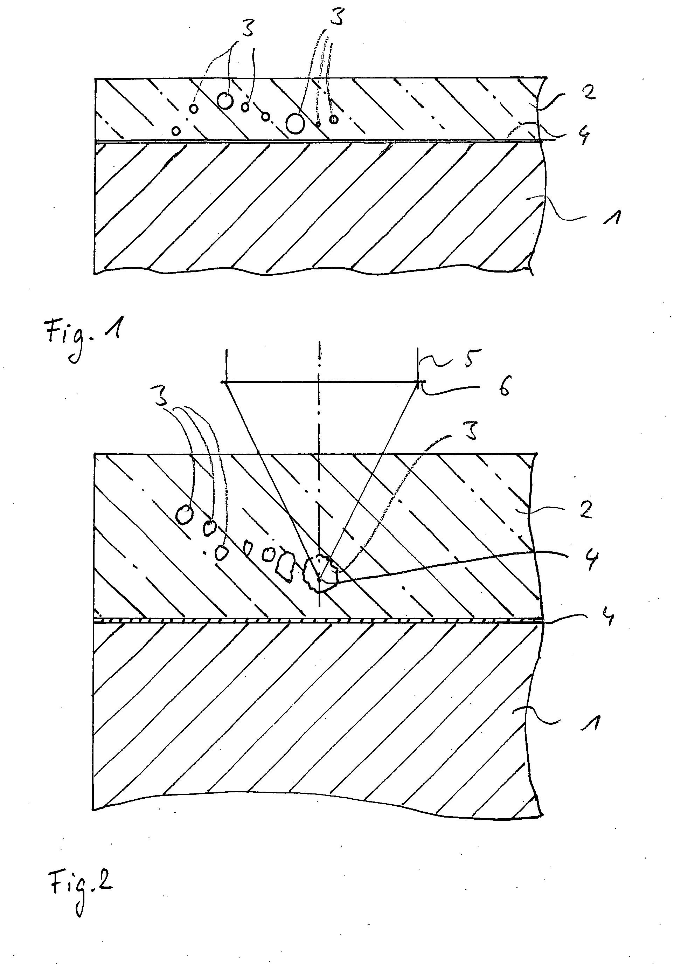

Wie in Fig. 1 dargestellt ist, weist ein kartenförmiger Datenträger ein Substrat 1 auf, auf dem eine Deckschicht 2 aufgebracht ist. In der Deckschicht 2 sind Lichtstreuzentren 3 vorgesehen, die entsprechend von darzustellender Information angeordnet sind. Die Lichtstreuzentren 3 stellen in der nicht näher gezeigten Draufsicht des Datenträgers Bild-, Schrift- oder andere Musterinformation dar, die vorzugsweise eine dreidimensionalen Eindruck bewirkt, da wie in Fig. 1 zu erkennen ist, die Lichtstreuzentren 3 in Dickenrichtung der Deckschicht 2 unterschiedlich tief in dieser angeordnet sind.

Vorzugsweise werden als Lichtstreuzentren 3 kleine transparente Bereiche gebildet, deren Brechungsindex von dem Brechungsindex der Deckschicht 3 verschieden ist. Am einfachsten lassen sich derartige kleine transparente Bereiche als Hohlräume oder Bläschen ausgestalten.

Die einzelnen Lichtstreuzentren, also die kleinen Hohlräume oder Bläschen 3 besitzen je nach der darzustellenden Information unterschiedliche Durchmesser, obwohl es auch denkbar ist, die Bläschen 3 mit gleichen Durchmessern herzustellen, und den Informationsgehalt durch Variation der Bläschendichte, also der Anzahl der Bläschen pro Längen- oder Flächeneinheit zu variieren.

Auf der von der Betrachterseite abgewandten Fläche der Deckschicht ist eine Kontrastschicht 4 vorgesehen, die im dargestellten Ausführungsbeispiel eine Zwischenschicht zwischen der Deckschicht 2 und dem Substrat 1 darstellt. Anstelle einer gesonderten Kontrastschicht ist es auch möglich, das Substrat 1 bzw. seine mit der Deckschicht in Kontakt stehende Oberfläche als Kontrastschicht auszubilden. Die Kontrastschicht 4 kann entweder eine diffus reflektierende Schicht oder eine lichtabsorbierende Schicht sein, je nach dem, ob sie Information im Hell-/Dunkel- oder Dunkel-/Hellkontrast dargestellt werden soll.

Obwohl in der Zeichnung die Deckschicht 2 als eine von einem Substrat 1 getragene Schicht dargestellt ist, ist es auch denkbar, die Deckschicht 2 als selbsttragende Schicht auszubilden, die auf ihrer Rückseite dann die Kontrastschicht 4 trägt. Die Deckschicht 2 kann eine homogene Schicht sein, es ist aber auch denkbar sie aus mehreren Schichten aufzubauen.

Der erfindungsgemäße Datenträger kann in nicht näher dargestellter Weise durch Bedrucken, Lasergravieren oder dergleichen mit zusätzlicher Information und/oder Sicherheitsmerkmalen versehen sein.

Wie in Fig. 2 gezeigt ist, werden die einzelnen Lichtstreuzentren mit Hilfe von Strahlung, insbesondere mit Hilfe von Licht, vorzugsweise mittels Laserstrahlung ausgebildet. Hierzu wird ein Laserstrahl 5 mit Hilfe einer entsprechenden Optik 6 in die Deckschicht 2 fokussiert, und zwar in der Weise, dass der Brennpunkt 7 des Laserstrahls an dem Ort liegt, an dem das gewünschte Lichtstreuzentrum, also im dargestellten Ausführungsbeispiel das Bläschen 3 als Lichtstreuzentrum ausgebildet werden soll. Bläschen lassen besonders einfach durch eine Art "Aufkochen" des Schichtmaterials, insbesondere von PC erzeugen. Es ist aber auch möglich Lichtstreuzentren z. B. durch eine Licht induzierte Reaktion im Schichtmaterial auszubilden.

Die unterschiedliche Größe der einzelnen Bläschen, die in der Deckschicht vorzugsweise durch das "Aufkochen" des Deckschichtmaterials gebildet werden, wird über die jeweilige Energie des Laserlichtimpulses gesteuert. Die Tiefe der Bläschen, also ihr Abstand von der Betrachtungsoberfläche wird durch die Lage des Brennpunkts des Laserstrahls 5 eingestellt, wobei vorgesehen sein kann, dass zunächst entsprechend der darzustellenden Information die am tiefsten in der Deckschicht liegenden Bläschen oder Lichtstreuzentren gebildet werden, um dann in einem zweiten und nachfolgenden weiteren Durchgängen die näher an der Oberfläche liegenden Bläschen herzustellen. Es ist aber auch möglich, sämtliche Punkte der darzustellenden Information in einem Durchgang auszubilden, wobei die Fokuslage und die Energie des Laserstrahls 5 für jeden Bildpunkt, also für jedes Bläschen oder Lichtstreuzentrum 3 einzustellen.

Eine Informationsdarstellung, beispielsweise ein Bild, z. B. ein Portraitfoto des Karteninhabers, Schriftinformation oder andere Muster insbesondere in dreidimensionaler Weise, die zusätzlich zu der üblichen gedruckten oder gravierten Informations- und Musterdarstellung in der erfindungsgemäßen Weise in eine transparente Deckschicht eines Datenträgers eingeschrieben ist, lässt sich durch einfaches Kopieren nicht in der Weise imitieren, dass es von einen auch nur ein wenig aufmerksamen Betrachter nicht erkannt werden würde.

Der erfindungsgemäße Datenträger weist somit eine erhöhte Fälschungssicherheit auf, da die als zusätzliches Sicherheitsmerkmal gedachte Darstellung von Information mittels Lichtstreuzentren in einer transparenten Schicht nur schwierig oder gar nicht kopiert werden kann.

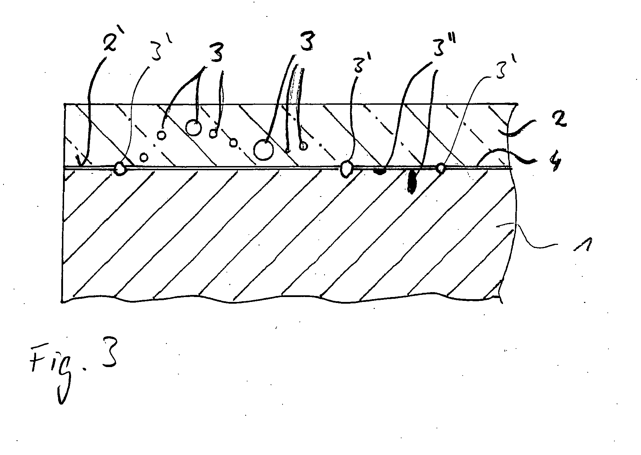

Gemäß einer anderen Ausgestaltung der Erfindung kann, wie in Figur 3 dargestellt ist, zur Darstellung der Information in der Deckschicht 2 zusätzlich vorgesehen sein, dass Lichtstreuzentren, insbesondere Bläschen so im Bereich der inneren Grenzfläche 2' der Deckschicht 2 ausgebildet werden, dass die die Lichtstreuzentren bildenden Bläschen sich durch die Kontrastschicht 4 hindurch bis in die den Aufzeichnungsbereich für die Individualisierung des Datenträgers tragende Schicht, also das Substrat 1, hineinerstrecken. Ferner ist es möglich, zur Darstellung einer Gesamtinformation die Lichtstreuzentren 3, 3' mit Bildpunkten 3" in oder auf dem Substrat 1 zu kombinieren.

Hierdurch wird die Fälschungssicherheit des erfindungsgemäßen Datenträgers weiter verbessert, da zum einen das Abtrennen der Deckschicht 2 vom Substrat 1 erschwert wird und da andererseits die Gesamtinformation beim Abtrennen der Deckschicht irreversibel zerstört wird und auch dann praktisch nicht rekonstruiert werden kann, wenn die Deckschicht nach dem Manipulieren des Aufzeichnungsbereichs auf dem Substrat 1 wieder darauf aufgebracht wird. Insgesamt wird also durch die Ausbildung der Lichtstreuzentren im Verbindungsbereich von Deckschicht 2, Kontrastschicht 4 und Substrat 1 die Fälschungssicherheit des erfindungsgemäßen kartenförmigen Datenträgers deutlich verbessert.

## Patentansprüche

1. Kartenförmiger Datenträger mit mindestens einer transparenten Deckschicht (2), der einen Aufzeichnungsbereich für Information aufweist, **dadurch gekennzeichnet, dass** in der Deckschicht (2) Lichtstreuzentren (3) entsprechend darzustellender Information vorgesehen sind.

2. Kartenförmiger Datenträger nach Anspruch 1, **dadurch gekennzeichnet, dass** als Lichtstreuzentren (3) kleine transparente Bereiche vorgesehen sind, deren Brechungsindex von dem der Deckschicht verschieden ist.

3. Kartenförmiger Datenträger nach Anspruch 1 oder 2, **dadurch gekennzeichnet, dass** als Lichtstreuzentren kleine Hohlräume oder Bläschen (3) vorgesehen sind,

4. Kartenförmiger Datenträger nach Anspruch 1, 2 oder 3, **dadurch gekennzeichnet, dass** der Durchmesser der Lichtstreuzentren (3) im Bereich von 0,25 mm bis 0,03 mm liegt.

5. Kartenförmiger Datenträger nach einem der vorstehenden Ansprüche, **dadurch gekennzeichnet, dass** die Lichtstreuzentren (3) entsprechend der von diesen darzustellenden Information unterschiedliche Durchmesser aufweisen.

6. Kartenförmiger Datenträger nach einem der vorstehenden Ansprüche, **dadurch gekennzeichnet, dass** die Lichtstreuzentren (3) entsprechend der von diesen darzustellenden Information für eine dreidimensionale Darstellung in Dickenrichtung der Deckschicht (2) gegeneinander versetzt sind.

7. Kartenförmiger Datenträger nach einem der vorstehenden Ansprüche, **dadurch gekennzeichnet, dass** der Fläche der Deckschicht (2), die von der Betrachtungsseite der Deckschicht (2) abgewandt ist, eine Kontrastschicht (4) zugeordnet ist.

8. Kartenförmiger Datenträger nach Anspruch 7, **dadurch gekennzeichnet, dass** als Kontrastschicht (4) eine diffus reflektierende Schicht vorgesehen ist.

9. Kartenförmiger Datenträger nach Anspruch 7, **dadurch gekennzeichnet, dass** als Kontrastschicht (4) eine Licht absorbierende Schicht vorgesehen ist.

10. Kartenförmiger Datenträger nach Anspruch 7, 8 oder 9, **dadurch gekennzeichnet, dass** die Kontrastschicht (4) von einem Substrat (1) gebildet ist.

11. Kartenförmiger Datenträger nach einem der vorstehenden Ansprüche, **dadurch gekennzeichnet, dass** die Deckschicht (2) aus Polycarbonat (PC) hergestellt ist.

12. Kartenförmiger Datenträger nach einem der vorstehenden Ansprüche, **dadurch gekennzeichnet, dass** die Lichtstreuzentren (3) unter Anwendung eines Laserstrahls (5) in der Deckschicht (2) ausgebildet sind.

13. Kartenförmiger Datenträger nach einem der vorstehenden Ansprüche, **dadurch gekennzeichnet, dass** eine Anzahl der Lichtstreuzentren (3) in der Deckschicht (2) sich bis in eine den Aufzeichnungsbereich für Information tragende Schicht (1) erstrecken.

14. Kartenförmiger Datenträger nach einem der vorstehenden Ansprüche, **dadurch gekennzeichnet, dass** zusätzlich zu den Lichtstreuzentren (3) in der Deckschicht (2) in oder auf einer den Aufzeichnungsbereich für Information tragenden Schicht (1) Bildpunkte vorgesehen sind, die gemeinsam mit den Lichtstreuzentren (3) in der Deckschicht (2) eine Gesamtinformation darstellen.

15. Verfahren zum Aufzeichnen von Information auf einen kartenförmigen Datenträger, der mindestens eine transparente Deckschicht (2) aufweist, **dadurch gekennzeichnet, dass** in einem Aufzeichnungsbereich in der Deckschicht (2) Lichtstreuzentren (3) entsprechend darzustellender Information mittels Strahlung, insbesondere mittels Licht, vorzugsweise mittels Laserstrahlung erzeugt werden.

16. Verfahren nach Anspruch 15, **dadurch gekennzeichnet, dass** der Brechungsindex der Deckschicht (2) zur Bildung der Lichtstreuzentren (3), die der aufzuzeichnenden Information entsprechen, durch Strahlung verändert wird, so dass kleine transparente Bereiche gebildet werden, deren Brechungsindex von dem der Deckschicht (2) verschieden ist.

17. Verfahren nach Anspruch 15 oder 16, **dadurch gekennzeichnet, dass** als Lichtstreuzentren kleine Hohlräume oder Bläschen (3) erzeugt werden, deren Durchmesser im Bereich von 0,25 mm bis 0,03 mm liegt.

18. Verfahren nach Anspruch 15, 16 oder 17, **dadurch gekennzeichnet, dass** die Lichtstreuzentren (3) entsprechend der von diesen darzustellenden Information mit unterschiedlichen Durchmesser hergestellt werden.

19. Verfahren nach einem der Ansprüche 15 bis 18, **dadurch gekennzeichnet, dass** die Lichtstreuzentren (3) entsprechend der von diesen darzustellenden Information für eine dreidimensionale Darstellung in Dickenrichtung der Deckschicht (2) gegeneinander versetzt ausgebildet werden.

20. Verfahren nach einem der Ansprüche 15 bis 19, **dadurch gekennzeichnet, dass** eine Anzahl der Lichtstreuzentren (3) so im Bereich einer inneren Oberfläche (2') der Deckschicht (2) mittels Strahlung erzeugt werden, dass sich diese Lichtstreuzentren bis in eine den Aufzeichnungsbereich für Information tragende Schicht (1) erstrecken.

21. Verfahren nach einem der Ansprüche 15 bis 20, **dadurch gekennzeichnet, dass** zusätzlich zu den Lichtstreuzentren (3) in der Deckschicht (2) in oder auf einer den Aufzeichnungsbereich für Information tragenden Schicht (1) mittels Strahlung, insbesondere mittels Licht, vorzugsweise mittels Laserstrahlung, Bildpunkte erzeugt werden, die gemeinsam mit den Lichtstreuzentren (3) in der Deckschicht (2) eine Gesamtinformation darstellen.

22. Verfahren nach einem der Ansprüche 15 bis 21, **dadurch gekennzeichnet, dass** die Deckschicht (2) aus Polycarbonat (PC) besteht.
